# EUROPEAN PATENT APPLICATION

(11) **EP 3 300 629 A1**
(43) Date of publication of application: **04.04.2018**
(21) Application number: 17194548.8
(22) Date of filing: 03.10.2017
(51) Int. Cl.: A47B 96/14, E04B 9/20, F16B 12/00, A47C 19/02, E04B 9/00, F16B 12/60

(54) **FASTENING DEVICE FOR FASTENING AN ACCESSORY TO A BED DEVICE**

(30) Priority: 03.10.2016 BE 201605736
(71) Applicant: Veldeman Bedding nv, 3660 Opglabbeek (BE)
(72) Inventor: DE BRUIJN, Marco, ummenUMMEN (BE)
(74) Representative: Cardoen, Annelies Andréa C.

(57) **Abstract**

Fastening device (1) for fastening an accessory (2) to a bed device (3), wherein the fastening device (1) comprises a first coupling portion (4) and a second coupling portion (5) which are respectively provided in order to be fastened to the accessory (2) and to the bed device (3) or vice versa, wherein the second coupling portion (5) can assume a first and a second position with respect to the first coupling portion (4), wherein these two positions are turned by 180° with respect to each other.

## Description

The present invention relates to a fastening device for fastening an accessory to a bed device, wherein the fastening device comprises a first coupling portion and a second coupling portion which are respectively provided in order to be fastened to the accessory and to the bed device or vice versa, wherein the first coupling portion comprises
- a base part,
- two projections which project with respect to the base part and extend in a first direction, wherein these projections, viewed along a cross section at right angles to the first direction, are directed towards each other and are virtually one another's mirror image,
wherein the base part and the two projections together form a rail with an interior space, and wherein the second coupling portion comprises
- two grooves which correspond to the projections,
wherein the grooves and the projections are slidably engageable in each other along the first direction in order to connect the first coupling portion to the second coupling portion.

The present invention also relates to an assembly of an accessory and a bed device, wherein this assembly comprises such a fastening device for fastening the accessory to the bed device. The present invention also relates to a method for fastening an accessory to a bed device by means of such a fastening device.

The term bed device may be used to denote a bed, but may also be used to denote other furniture devices which comprise a mattress core and a frame, such as an armchair, a lounge chair, a garden chair, etc.

The term accessory can denote, for example, a headboard, but may also denote a night table, an armrest, etc. More specifically, the present invention relates to a fastening device for fastening a headboard to a bed.

In order to fasten accessories, such as headboards, to bed devices, use is often made of fastening devices which comprise two mutually coupleable coupling portions. The one coupling portion is then fastened to the accessory, while the other coupling portion is fastened to the bed device. In order to then couple the accessory to the bed device, only the coupling portions have to be coupled to each other. For ease of use, use is often made of coupling portions which are slidably engageable in each other. The drawback with these fastening devices is that not all accessories and bed devices are identical. The coupling portions have to be fastened to hard components of the accessories or the bed devices, for example to the (wooden) frame. However, this frame is often surrounded by a surrounding portion, comprising a covering and optionally filling, in which case the thickness of this surrounding portion may vary. As a result thereof, the position of said coupling portion with respect to the accessory or the bed device differs, thus requiring different types of coupling portions for different types of headboards and bed devices. This in order to ensure that the first and second coupling portions can be coupled to each other.

A solution to this problem is to provide standard coupling portions and a separate spacer, which is then always supplied. If required, this spacer can then be fitted between the coupling portion and the accessory or between the coupling portion and the bed device. As a result thereof, the coupling portions can be coupled to each other even if the surrounding portion of the accessory or the bed device has a certain thickness. The reason for this is that in this case the distance of the grooves from the frame can be selected such that the projections are slideable into the grooves. The drawback in this case is that a separate spacer has to be provided. If the spacer is not used, this means an unnecessary additional expenditure. Also, this is an additional component, as a result of which a greater transport volume is required. Also, this additional component is a component which may get lost and which also has to be packed separately. This spacer also has to be fastened, which requires additional time. If the accessory is packed together with the fastening device, components which wander about or project in a packaging, such as a spacer, may damage the accessory during transportation or storage.

It is therefore an object of the invention to produce a fastening device for fastening an accessory to a bed device, wherein this fastening device allows for a quick connection between the accessory and the bed device and which does not have the abovementioned drawbacks.

This object is achieved by providing a fastening device for fastening an accessory to a bed device, having the features described in the first paragraph, wherein the grooves extend along a plane which splits the second coupling portion into a first and a second part, wherein, in the connected position of the first and the second coupling portion, the second coupling portion can assume a first and a second position with respect to the first coupling portion, wherein these two positions are turned by 180° with respect to each other and, in the first position, the first part extends substantially in the interior space while the second part extends substantially outside the rail, and, in the second position, the second part extends substantially in the interior space while the first part extends substantially outside the rail, and wherein, viewed along a direction at right angles to said plane, the maximum dimension of the first part is greater than the maximum dimension of the second part.

As the second coupling portion can assume said two positions with respect to the first coupling portion and as the maximum dimension of the first part is greater than the maximum dimension of the second part, two distances between the accessory and the bed device are thus possible in a connected position of the accessory and the bed device. In both said positions, the coupling portions can thus perform their function and connect the accessory to the bed device. These positions may thus also be denoted as positions of use. In a connected position of the first and the second coupling portion, and thus also in a connected position of the accessory to the bed device, the second coupling portion assumes either the first or the second position with respect to the first coupling portion, these two positions being turned 180° with respect to each other. In this case, a connected position of the first and the second coupling portion is thus always a position in which the fastening device is able to fasten an accessory to a bed device.

As the second coupling portion is able to assume the said two positions, it is possible to choose here how to fasten the second coupling portion to the bed device and thus whether the first part or the second part of the second coupling portion will substantially extend in the interior space of the first coupling portion in a connected position of the accessory to the bed device. Normally, the bed device comprises a frame to which the second coupling portion is fastened. By choosing the way in which the second coupling portion is connected to the frame, it is possible to choose the distance of the grooves to the frame in such a way that the projections are slideable into the grooves and the distance between the accessory and the bed device is satisfactory. Here, it is thus possible to choose between two distances between the first coupling portion and the frame of the bed device. In order words, such a fastening device is thus useful with different types of accessories and bed devices without a separate spacer having to be additionally provided. Obviously, it is still possible to provide a separate spacer in order to be able to create yet more distance between the accessory and the frame of the bed device. It is possible to use one or more of these fastening devices to fasten an accessory to a bed device.

Preferably, the first coupling portion and the second coupling portion are detachably attachable to each other. This fastening device can then be transported in a very compact manner, since the two coupling portions can be slid into each other. Preferably, the coupling portions can be slid into each other such that the first part of the second coupling portion is substantially in the interior space. The fastening device then takes up a small volume. This also avoids loose components. Preferably, the accessory and the fastening device are delivered to the client in such a way that the first coupling portion is already fastened to the accessory and the first coupling portion and the second coupling portion have been slid into each other. The customer may be, for example, the consumer or the individual selling the bed device and the accessory. By already fastening the fastening device to the accessory in this case, the fastening device does not have to be supplied separately, as a result of which it cannot get lost and/or cause damage to the accessory during transportation. In addition, no coupling portions have to be provided on bed devices to which no accessories are to be fastened, as the fastening device is supplied with the accessory.

Here, the projections are directed towards each other and thus face inwards. In this case, the rail extends along the first direction. This rail is furthermore preferably configured in such a way that, viewed along a cross section at right angles to the first direction, this rail is virtually symmetrical.

In a preferred embodiment, the second coupling portion is substantially made of plastic. An additional drawback with the existing fastening devices is the fact that the two coupling portions are still able to move slightly with respect to each other when they are connected to each other. There is thus some play between the connected coupling portions. Due to this play, the accessory can still move slightly with respect to the bed device when it is connected to the bed device by means of the fastening device. This is obviously undesirable and also produces a noise, as the coupling portions of existing fastening devices are made of metal. By here providing a second coupling portion which is substantially made of plastic, it is possible to reduce the amount of play in this case, as a plastic component of the desired dimensions can be produced very accurately. In addition, a moving plastic component causes less noise compared to a metal component.

Furthermore preferably, the first coupling portion is made of metal. In this case, the first coupling portion may be made strong and robust, so that the accessory is securely fastenable to the bed device.

Preferably, the projections each comprise a leg which extends virtually parallel to the base part. Such projections are easy to produce. This is particularly the case if the first coupling portion is substantially made of metal. Thus, the base part and the projections may, for example, be produced as a single part by means of extrusion or injection-moulding. By means of such projections, it is also readily possible to form a rail comprising an interior space. These legs can easily be fitted into the grooves.

In a highly preferred embodiment, the first coupling portion comprises a detaining element which delimits the rail on one side, viewed along the first direction, so that the second coupling portion is slideable into the first coupling portion via the other side and is slideable up to the detaining element. This is highly suitable for accessories which are to be fastened to the bed device in a vertical direction, from the top downwards. The first coupling portion is then fastened to the accessory in such a way that the first direction is provided to extend virtually vertically in the connected position of the accessory to the bed device. The side which the detaining element then delimits is the top side. The second coupling portion is fastened to the accessory in such a way that it extends virtually vertically in the connected position of the accessory to the bed device. In this case, the accessory only has to be brought down in such a way that the first coupling portion slides over the second coupling portion until the detaining element knocks against the second coupling portion. Here, the force of gravity helps to fasten the accessory to the bed device. This is a very useful way of fastening a headboard to a bed.

Furthermore preferably, the detaining element is plate-shaped. Plate-shaped elements can easily be produced, in particular if the first coupling portion is made of metal. The detaining element is then preferably a platelet which is fastened to the base part. A plate-shaped element is also able to withstand many forces.

In a preferred embodiment, the first coupling portion comprises at least one first opening and the second coupling portion comprises at least one second opening, these first and second openings being situated opposite one another in the connected position of the first and the second coupling portion, so that a fastening element, such as a screw or a bolt, is fittable through the second opening and through the first opening in order to connect the first coupling portion to the accessory. In order to fasten the first coupling portion to the accessory, the second coupling portion can be connected to the first coupling portion here. In this way, it is readily possible here to supply the fastening device in such a way in the space where the accessory is located that the first coupling portion and the second coupling portion are connected to each other, wherein these are then fastened to the accessory in the connected position. As a result thereof, no components of the fastening device can get lost and the fastening device can quickly be fastened to the accessory. After the accessory has been supplied, it is then possible to quickly slide the second coupling portion out of the first coupling portion and fasten the second coupling portion to the bed device.

The first opening is preferably a recessed opening, so that the fastening element does not hamper the sliding apart of the first and the second coupling portion. Preferably, there are at least two such first openings and at least two such second openings in order thus to make a strong connection to the accessory possible.

Furthermore preferably, the second coupling portion comprises one or several flexible guide elements which extend in the second opening for guiding a fastening element, such as a screw or bolt. If the first coupling portion is then fastened to the accessory when the second coupling portion is connected to the first coupling portion, these one or several guide elements will securely hold the fastening element and guide it during the fitting of the fastening element through said first opening, so that the fastening of the fastening device to the accessory can proceed quickly and smoothly.

The second coupling portion preferably comprises one or several recesses in which components, such as bolts, are fittable. As recesses are present in this case, all the components which are necessary to achieve the fastening of the accessory and the headboard can be provided in these spaces. Thus, it is for example possible to store the screws or bolts for fastening the second coupling portion to the bed device in these spaces. It is also possible to store a manual in these spaces. In this case, the fastening device may be supplied in a compact format without the risk of components getting lost or components causing damage to the accessory. If the fastening device as such is supplied, the first coupling portion and the second coupling portion are preferably connected to each other and screws/bolts are arranged in the spaces. These may be screws/bolts to fasten, for example, the second coupling portion to the bed device, but may also be screws/bolts to fasten the first coupling portion to the accessory. When it is intended to supply the accessory together with the fastening device, then there are preferably screws/bolts in the spaces with which the second coupling portion is attachable to the bed device. The second coupling portion may, for example, be a block-shaped element, comprising spaces in its second part and/or its first part.

Furthermore preferably, the second coupling portion comprises one or several spacers which are accommodatable in said one or several recesses, wherein these spacers are fastenable to the first or the second part in order to increase the maximum dimensions of the first or the second part, viewed along a direction at right angles to the plane B. As a result thereof, at least 3 different distances may be chosen between the frame of the bed device and the grooves. In an alternative embodiment, the one or several spacers may be fastened to the first coupling portion. As the one or several spacers are accommodated in spaces of the second coupling portion, there are no loose pieces present when delivering the fastening device.

In a highly preferred embodiment, the accessory is a headboard.

The present invention also relates to an assembly of an accessory and a bed device, wherein this assembly comprises a fastening device for fastening the accessory to the bed device, characterized in that the fastening device is a fastening device as described above.

The present invention also relates to a method for fastening an accessory to a bed device by means of a fastening device as described above, the method comprising the following steps:
- fastening the first coupling portion to the accessory while the first coupling portion and the second coupling portion are connected to each other,
- sliding the second coupling portion out of the first coupling portion along the first direction to detach the second coupling portion from the first coupling portion,
- fastening the second coupling portion to the bed device,
- sliding the first coupling portion and the second coupling portion into each other in order to fasten the accessory to the bed device.

In this case, provision is then preferably made to supply the bed device separately and to supply the accessory to which the fastening device is fastened separately as well. By fastening the fastening device to the accessory in the above-described way, there is little risk of losing components of the fastening device or risk of damage by the components of the fastening device. The accessory and fastening device are in this case suppliable in a compact way. Preferably, the first part is situated in the interior space while the fastening device is being connected to the accessory. This method allows a quick connection between the accessory and the bed device.

Preferably, the first coupling portion here comprises at least one first, optionally recessed, opening, and the second coupling portion comprises at least one second opening, these first and second openings being situated opposite one another in the connected position of the first and the second coupling portion, so that a fastening element, such as a screw or a bolt, is fittable through the second opening and through the first opening in order to connect the first coupling portion to the accessory. As a result, it is readily possible to fit a screw/bolt to fasten the first coupling portion to the accessory, while the first coupling portion and the second coupling portion are connected to each other.

Furthermore preferably, the second coupling portion comprises one or several flexible guide elements which extend in the second opening, in which case these guide the fitting of the fastening element through the second opening and through the first opening.

The present invention will now be explained in more detail by means of the following detailed description of a preferred embodiment of a fastening device according to the present invention. The sole aim of this description is to provide illustrative examples and to indicate further advantages and features and can therefore by no means be interpreted as a limitation of the area of application of the invention or of the patent rights defined in the claims.

This detailed description uses reference numerals to refer to the attached drawings, in which:
- ***Fig. 1*** shows a perspective view of a detail view of a headboard to which a first coupling portion is fastened and a second coupling portion which is fastened to a bed (not shown) while the first coupling portion and the second coupling portion are being slid into each other;
- ***Fig. 2*** is a perspective view of a detail view of a bed and a second coupling portion while the second coupling portion is being fastened to the bed by means of bolts;
- ***Fig. 3*** shows a cross section of the second coupling portion;
- ***Fig. 4*** *sh*ows a perspective view of a detail view of a headboard to which the fastening device is fastened;
- ***Fig. 5*** shows a perspective view of a detail view of a headboard to which a first coupling portion is fastened and a second coupling portion while the first coupling portion and the second coupling portion are being slid into each other;
- ***Fig. 6*** shows a perspective view of the fastening device;
- ***Fig. 7*** shows a perspective view of a headboard to which two fastening devices are fastened;
- ***Fig. 8*** shows a perspective view of a headboard and a bed in which two first coupling portions are fastened to the headboard and two second coupling portions (not shown) are fastened to the bed while the headboard is being fastened to the bed by means of said coupling portions;
- ***Fig. 9*** shows a cross section of the fastening device at the location of the first and the second opening of the first and the second coupling portion, respectively, wherein the second coupling portion is coupled to the first coupling portion in a first position, and wherein a screw is fitted through the first opening;
- ***Fig. 10*** shows a cross section of the fastening device at the location of the first and the second opening of the first and the second coupling portion, respectively, wherein the second coupling portion is coupled to the first coupling portion in a second position, and wherein a screw is fitted through the first opening;
- ***Fig. 11*** shows a cross section of the fastening device at the location of the first and the second opening of the first and the second coupling portion, respectively, wherein the second coupling portion is coupled to the first coupling portion in a first position, while a screw is being fitted through the first and the second opening;
- ***Fig. 12*** shows a perspective view of the fastening device in which the second coupling portion is coupled to the first coupling portion in a first position, while a screw is being fitted through the second and the first opening, and in which the second coupling portion is cut at the location of the second opening;
- ***Fig. 13*** shows a perspective view of the fastening device in which the second coupling portion is coupled to the first coupling portion in a first position, in which a screw is fitted through the first opening, and in which the second coupling portion is cut at the location of the second opening;
- ***Fig. 14*** shows a perspective view of the fastening device wherein the second coupling portion is coupled to the first coupling portion in a first position while screws are being fitted through the second and the first openings;
- ***Fig. 15*** shows a perspective view of the fastening device in which the second coupling portion is coupled to the first coupling portion in a first position, and in which spacers are arranged in the recesses of the second coupling portion.
- ***Fig. 16*** shows a perspective view of the fastening device in which the second coupling portion is coupled to the first coupling portion in a second position, and in which spacers are fastened to the first part of the second coupling portion.

These figures illustrate a possible embodiment of a fastening device (1). Obviously, the present invention is not limited to this embodiment.

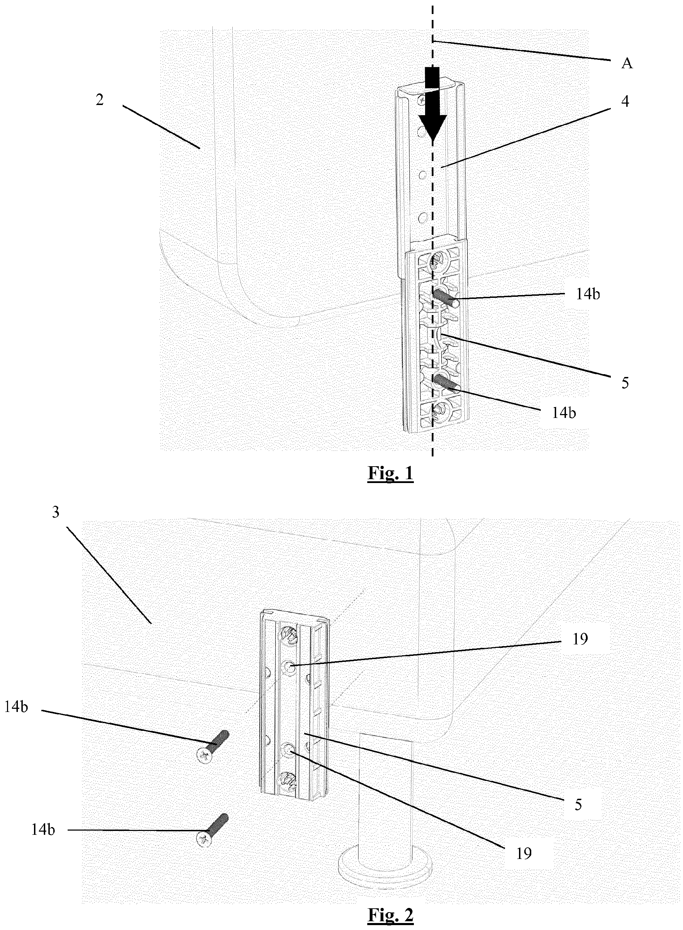

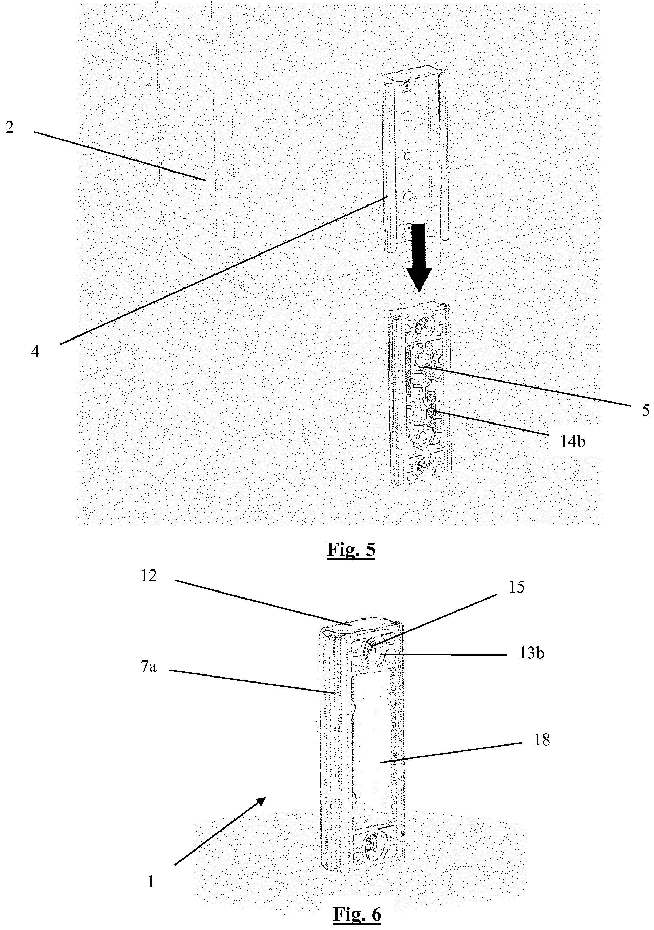

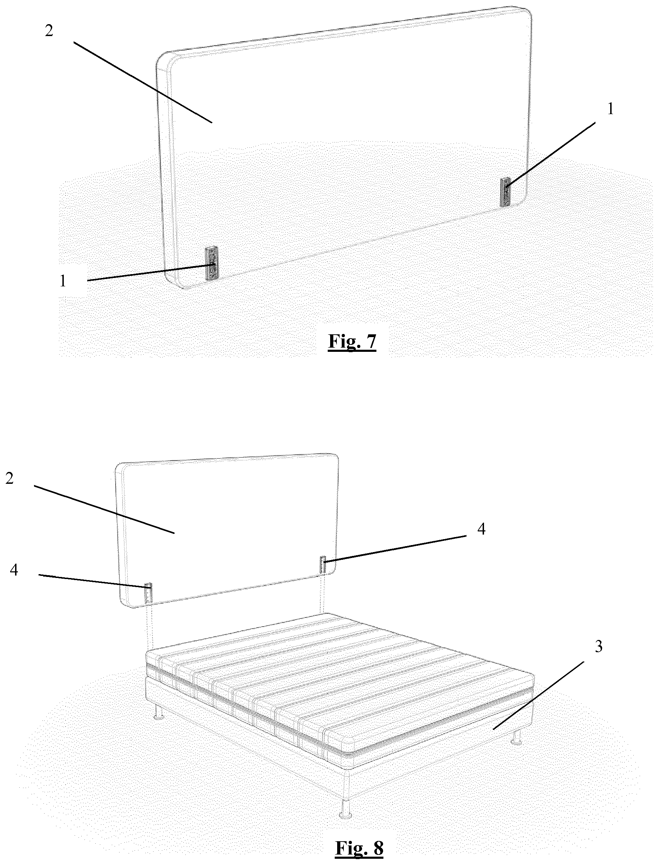

The fastening device (1) is used to fasten a headboard (2) to a bed (3). To this end, this fastening device (1) comprises a first coupling portion (4) which is provided to be fastened to the headboard (2), and a second coupling portion (5) which is provided to be fastened to the bed (3). It can clearly be seen in Figs. 1, 5 and 8 that the first coupling portion (4) is fastened to the headboard (2) by means of screws (14a) which are fitted through first openings (13a) of the first coupling portion (4). Fig. 2 shows how the second coupling portion (5) is fastened to the bed (3). This is carried out by means of two bolts (14b) which are fittable through two bolt openings (19) of the second coupling portion (5). The first coupling portion (4) is substantially made of metal and the second coupling portion (5) is substantially made of plastic.

The first coupling portion (4) comprises a base part (6), comprising said first openings (13a), and two projections (7a, 7b) which project with respect to the base part (6) and extend in a first direction (A), wherein these projections (7a, 7b), viewed along a cross section at right angles to the first direction (A), are directed towards each other, and are virtually each other's mirror image. The projections (7a, 7b) each comprise a leg (9a, 9b) which extends virtually parallel to the base part (6). The base part (6) and the two projections (7a, 7b) together form a rail with an interior space (8). The first coupling portion (4) comprises a plate-shaped detaining element (12) which delimits the rail on one side, viewed along the first direction (A).

The second coupling portion (5) comprises two grooves (10a, 10b) which correspond to the projections (7a, 7b) and which extend along the first direction (A), in the connected position of the first coupling portion (4) of the second coupling portion (5). The grooves (10a, 10b) extend along a plane (B) which splits the second coupling portion (5) into a first and a second part (11a, 11b). The plane (B) extends along the first direction (A) in the connected position of the first coupling portion (4) of the second coupling portion (5).

The grooves (10a, 10b) and the projections (7a, 7b) are slidably engageable in each other along the first direction (A) and via the other side of the rail in order to connect the first coupling portion (4) to the second coupling portion (5). The second coupling portion (5) can be slid into the rail in two ways. Thus, the second coupling portion (5) can slide into the rail in such a manner that the first part (11a) slides substantially into the interior space (8) while the second part (11b) is substantially situated outside the rail or the second coupling portion (5) can be slid into the rail in such a manner that the second part (11b) slides substantially into the interior space (8) while the first part (11a) is substantially situated outside the rail. Sliding-in takes place until the second coupling portion (5) abuts the detaining element (12). As a result thereof, the second coupling portion (5) can, in the connected position with the first coupling portion (4), assume two positions with respect to the first coupling portion (4). Namely a first position in which the first part (11a) extends substantially in the interior space (8) while the second part (11b) extends substantially outside the rail, and a second position in which the second part (11b) extends substantially in the interior space (8) while the first part (11a) extends substantially outside the rail. These positions are turned by 180° with respect to each other. Viewed along a direction at right angles to said plane (B), the maximum dimension of the first part (11a) is greater than the maximum dimension of the second part (11b). The bolt openings (19) are recessed at the location of the first part (11a) in such a way that, in the first position, the bolts (14b) can extend through the bolt openings (19) and do not impede the coupling portions (4, 5) when they are being slid into each other.

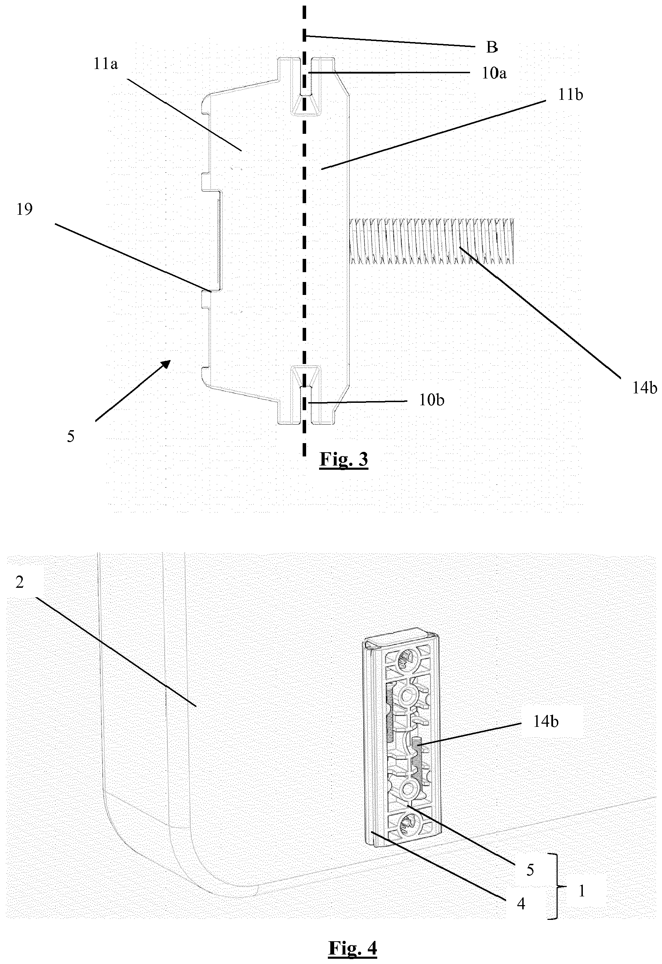

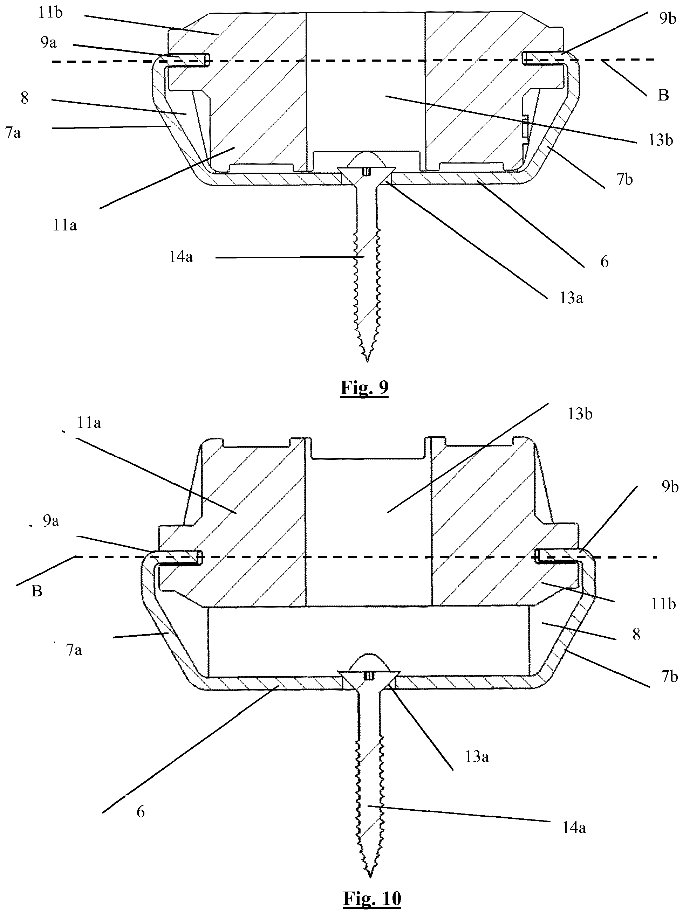

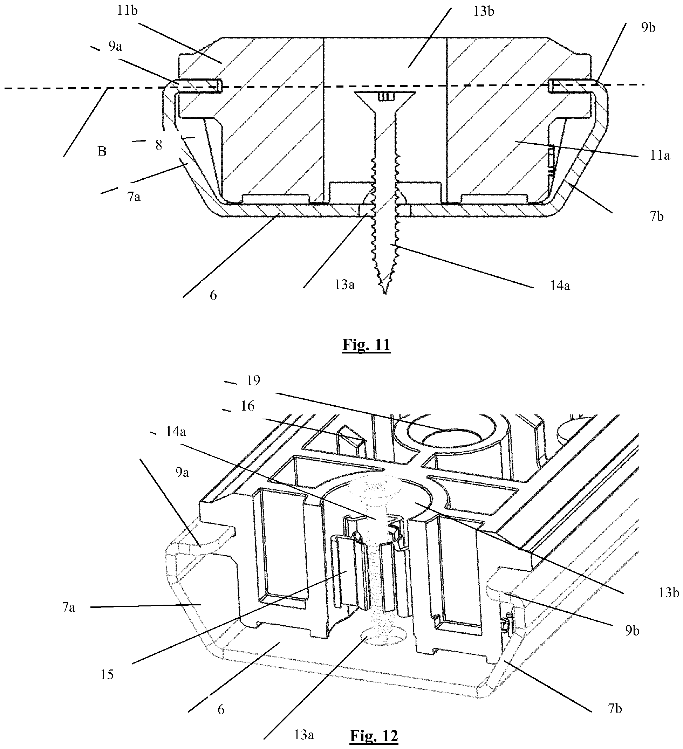

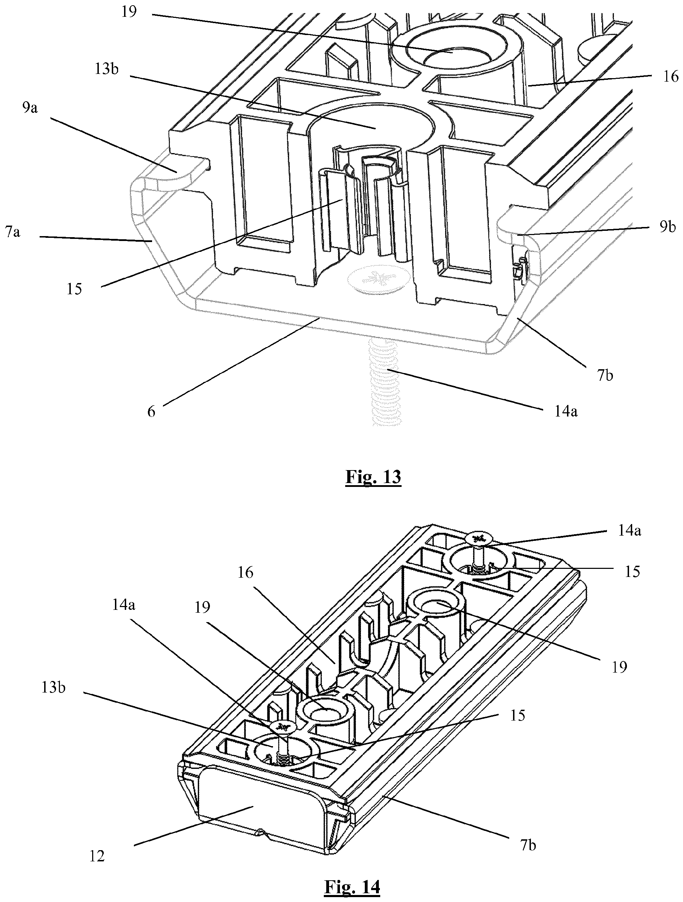

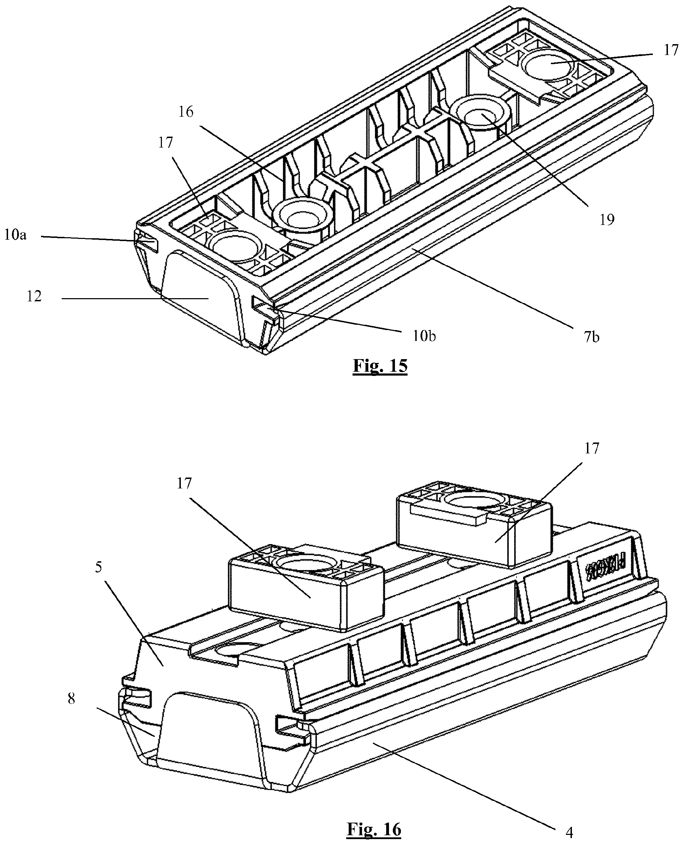

Figs. 1, 4 to 6, 9, 11 to 15 illustrate the first position or the first sliding operation. Figs. 10 and 15 illustrate the second position.

The first coupling portion (4) comprises two first openings (13a) and the second coupling portion (5) comprises two second openings (13b), said openings (13a, 13b) being situated opposite each other in pairs in the connected position of the first and the second coupling portion (4, 5). As a result thereof, a screw (14a) may be fitted through one of said second openings (13b) and subsequently also through the opposite first opening (13a), as is shown in Figs. 9 to 14. Furthermore, each second coupling portion (5) comprises several flexible guide elements (15) which extend into each second opening (13b) in order to guide a screw (14a) while fitting a screw (14a) through one of said second openings (13b) and an opposite first opening (13a).

The second coupling portion (5) comprises several recesses (16) in which components, such as bolts (14b) and a manual (18), are fittable. Said recesses (16) may also accommodate several spacers (17). These spacers (17) are attachable to the first or the second part (11a, 11b) in order to increase the maximum dimensions of the first or the second part (11a, 11b), viewed along a direction at right angles to the plane B, as is illustrated in Figs. 15 and 16.

By means of this fastening device (1), the headboard (2) can be fastened to the bed (3) in a simple and quick manner. A possible way of fastening is described below, but other ways of fastening are also possible.

First of all, two first coupling portions (4) are made out of metal and two second coupling portions (5) are made out of plastic. These coupling portions (4, 5) form two fastening devices (1), but only the fastening of one fastening device (1) will be described here, as it is the same for both fastening devices (1).

Thereafter, the second coupling portion (5) and the first coupling portion (4) are slid into each other via the other side of the rail which is not delimited by the detaining element (12). They are slid into each other until the second coupling portion (5) abuts the detaining element (12). They are slid into each other such that the first part (11a) of the second coupling portion (5) is situated in the interior space (8) of the first coupling portion (4). Then, the coupling portions (4, 5) which have been slid into each other are fastened to the headboard (2). This is effected by fitting a screw (14a) through each second opening (13b) of the second coupling portion (5) and through the first opening (13a) situated opposite the second opening (13b) until the heads of the screws (14a) are recessed in the base part (6). The fastening device (1) is fastened to the headboard (2) in such a way that, in the use position of the headboard (1), said first direction (A) extends virtually vertically. Bolts (14b) are fitted in the recesses (16) of the second coupling portion (5), by means of which the second coupling portion (5) is attachable to the bed (3). It is also possible to fit a manual (18) in the recesses (16). Fitting bolts (14b) and, optionally and additionally, a manual (18) in the recesses (16) may be effected prior to the fastening device (1) being fastened to the headboard (2) or thereafter. This also depends on whether these bolts (14b) or this manual (18) would hinder the fastening of the fastening device (1) to the headboard (2).

Thereafter, the headboard (2) with the two fastening devices (1) which are connected thereto is packaged and transported to the bed (3).

Thereafter, the second coupling portion (5) is slid out of the first coupling portion (4). The bolts (14b) are removed from the recesses (16), so that the second coupling portion (5) can be coupled to the bed (3) by means of the bolts (14b). Depending on the position of the type of bed (3) and the type of headboard (2), it is possible to choose to connect the second coupling portion (5) to the bed (3) in such a way that either the first part (11a) makes direct contact with the bed (3) or the second part (11b) makes direct contact with the bed (3). Fastening is effected by fitting the bolts (14b) through the bolt openings (19) of the second coupling portion (5) as far as into the frame of the bed (3). The second coupling portion (5) is fastened to the bed (3) in such a way that, in the use position of the bed (3), the second coupling portion (5) extends virtually vertically.

Subsequently, the headboard (2) is moved from the top down along the vertical direction in such a way that the first coupling portions (4) slide over the second coupling portion (5), such that the legs (9a, 9b) of the projections (7a, 7b) engage in the grooves (10a, 10b) and continues until the detaining element (12) comes into contact with the second coupling portion (5).

If, in the connected position of the headboard (2) and the bed (3), the distance between the first coupling portion (4) and the frame has to be relatively small, the second coupling portion (5) will be connected to the bed (3) in such a way that the second part (11b) contacts the bed (3) directly. In the connected position of the bed (3) and the headboard (2), the first part (11a) is then in the interior space (8). If, in the connected position of the headboard (2) and the bed (3), the distance between the first coupling portion (4) and the frame has to be relatively large, the second coupling portion (5) will be connected to the bed (3) in such a way that the first part (11a) contacts the bed (3) directly. In the connected position of the bed (3) and the headboard (2), the second part (11b) is then situated in the interior space (8).

## Claims

1. Fastening device (1) for fastening an accessory (2) to a bed device (3), wherein the fastening device (1) comprises a first coupling portion (4) and a second coupling portion (5) which are respectively provided in order to be fastened to the accessory (2) and to the bed device (3) or vice versa, wherein the first coupling portion (4) comprises
• a base part (6),
• two projections (7a, 7b) which project with respect to the base part (6) and extend in a first direction (A), wherein these projections (7a, 7b), viewed along a cross section at right angles to the first direction (A), are directed towards each other and are virtually one another's mirror image,
wherein the base part (6) and the two projections (7a, 7b) together form a rail with an interior space (8), and wherein the second coupling portion (5) comprises
• two grooves (10a, 10b) which correspond to the projections (7a, 7b),
wherein the grooves (10a, 10b) and the projections (7a, 7b) are slidably engageable in each other along the first direction (A) in order to connect the first coupling portion (4) to the second coupling portion (5), **characterized in that** the grooves (10a, 10b) extend along a plane (B) which splits the second coupling portion (5) into a first and a second part (11a, 11b), **in that**, in the connected position of the first and the second coupling portion (4, 5), the second coupling portion (5) can assume a first and a second position with respect to the first coupling portion (4), wherein these two positions are turned by 180° with respect to each other and **in that**, in the first position, the first part (11a) extends substantially in the interior space (8) while the second part (11b) extends substantially outside the rail, and **in that**, in the second position, the second part (11b) extends substantially in the interior space (8) while the first part (11a) extends substantially outside the rail, and **in that**, viewed along a direction at right angles to said plane (B), the maximum dimension of the first part (11a) is greater than the maximum dimension of the second part (11b).

2. Fastening device (1) according to Claim 1, **characterized in that** the second coupling portion (5) is substantially made of plastic.

3. Fastening device (1) according to Claim 1, **characterized in that** the second coupling portion (5) is substantially made of plastic and the first coupling portion (4) is substantially made of metal.

4. Fastening device (1) according to one of the preceding claims, **characterized in that** the projections (7a, 7b) each comprise a leg (9a, 9b) which extends virtually parallel to the base part (6).

5. Fastening device (1) according to one of the preceding claims, **characterized in that** the first coupling portion (4) comprises a detaining element (12) which delimits the rail on one side, viewed along the first direction (A), so that the second coupling portion (5) is slideable into the first coupling portion (4) via the other side and is slideable up to the detaining element (12).

6. Fastening device (1) according to Claim 5, **characterized in that** the detaining element (12) is plate-shaped.

7. Fastening device (1) according to one of the preceding claims, **characterized in that** the first coupling portion (4) comprises at least one first opening (13a) and the second coupling portion (5) comprises at least one second opening (13b), these first and second openings (13a, 13b) being situated opposite one another in connected position of the first and the second coupling portion (4, 5), so that a fastening element, such as a screw (14a) or a bolt, is fittable through the second opening (13b) and through the first opening (13a) in order to connect the first coupling portion (4) to the accessory (2).

8. Fastening device (1) according to Claim 7, **characterized in that** the second coupling portion (5) comprises one or several flexible guide elements (15) which extend in the second opening (13b) for guiding a fastening element.

9. Fastening device (1) according to one of the preceding claims, **characterized in that** the second coupling portion (5) comprises one or several recesses (16) in which components are fittable.

10. Fastening device (1) according to Claim 9, **characterized in that** the second coupling portion (5) comprises one or several spacers (17) which are accommodatable in said one or several recesses (16), wherein these spacers (17) are fastenable to the first or the second part (11a, 11b) in order to increase the maximum dimensions of the first or the second part (11a, 11b), viewed along a direction at right angles to the plane B.

11. Fastening device (1) according to one of the preceding claims, **characterized in that** the accessory (2) is a headboard.

12. Assembly of an accessory (2) and a bed device (3), wherein this assembly comprises a fastening device (1) for fastening the accessory (2) to the bed device (3), **characterized in that** the fastening device (1) is a fastening device (1) according to one of Claims 1 to 11.

13. Method for fastening an accessory (2) to a bed device (3) by means of a fastening device (1), **characterized in that** the fastening device (1) is a fastening device (1) according to one of Claims 1 to 11 and **in that** the method comprises the following steps:
• fastening the first coupling portion (4) to the accessory (2) while the first coupling portion (4) and the second coupling portion (5) are connected to each other,
• sliding the second coupling portion (5) out of the first coupling portion (4) along the first direction (A) to detach the second coupling portion (5) from the first coupling portion (4),
• fastening the second coupling portion (5) to the bed device (3),
• sliding the first coupling portion (4) and the second coupling portion (5) into each other in order to fasten the accessory (2) to the bed device (3).
